# FASCICULE DE BREVET EUROPEEN

(11) **EP 0 419 336 B1**
(45) Date de publication et mention de la délivrance du brevet: **07.12.1994**
(21) Numéro de dépôt: 90402556.6
(22) Date de dépôt: 17.09.1990
(51) Int. Cl.: B60N 2/08, F16B 2/18

(54) **Dispositif de blocage de vérins mécaniques à déplacement soit rectiligne, soit circulaire**
Sperrvorrichtung für eine mechanische Winde mit geradliniger oder kreisförmiger Bewegung
Locking device for a mechanical actuator with rectilinear or circular movement

(30) Priorité: 21.09.1989 FR 8912406
(43) Date de publication de la demande: 27.03.1991
(73) Titulaire: ETS. COUSIN FRERES, F-61101 Flers Cédex (FR)
(72) Inventeur: Droulon, Georges, F-61100 Flers (FR)
(74) Mandataire: Madeuf, René Louis

(56) Documents cités:
- EP-A- 0 240 416
- DE-A- 3 218 379
- FR-A- 2 547 078
- FR-A- 2 574 721
- FR-A- 2 592 441
- US-A- 4 865 386

## Description

On connaît déjà des vérins à blocage par galets en position indifférente car ces vérins sont utilisés de plus en plus dans l'industrie automobile ainsi que pour le réglage des sièges d'engins nautiques et aériens.

Les différentes solutions n'ont cependant pas donné satisfaction car la sécurité de blocage est insuffisante.

C'est ainsi que l'on peut citer comme documents antérieurs les demandes de brevet FR - A - 2 592 441 (correspondant au préambule de la revendication 1) et FR - A - 2 574 721.

Mais, dans les deux cas, il est fait appel pour le déplacement et le blocage à des galets lisses qui obligent à prévoir un dispositif complémentaire de sécurité qui est donc coûteux et qui n'est pas complètement sûr.

La présente invention remédie à ces inconvénients en créant un dispositif de blocage des vérins mécaniques à déplacements rectilignes ou circulaires dont l'étude a été dirigée tout particulièrement pour la réalisation du déplacement rectiligne et continu du siège et du débattement circulaire et continu du dossier de sièges dont les mouvements peuvent être réalisés soit manuellement, soit avec une motorisation appropriée.

Ces réalisations sont très simples et en même temps très sûres car le blocage est parfait et résiste aussi bien aux chocs transversaux qu'aux chocs frontaux. Aussi, les sièges équipés de ces dispositifs sont non seulement très facilement réglables par l'utilisateur mais permettent une grande sécurité car, en cas d'accidents, ils absorbent, en se déformant, une énergie considérable protégeant ainsi par déformation le passager assis sur le siège sans risque de déverrouillage intempestif.

Conformément à l'invention, le dispositif de blocage de vérins mécaniques à déplacement soit rectiligne, soit circulaire comprend au moins une tige, normalement bloquée par des galets montés sur des axes et coopérant avec des grains en V, comportant des rampes et dont le déplacement vertical est créé par la rotation d'une came entrainée dans son mouvement de rotation par des organes de commande, solidaires d'une pièce circulaire, lesdits organes de commande étant entraînés soit par une commande manuelle, soit par une commande moteur, caractérisé en ce que les organes de commande sont des plots, et en ce que les axes des galets sont montés sur au moins une pièce manoeuvrée par un ergot solidaire de la came, assurant ainsi un rappel positif des galets.

Suivant une autre caractéristique de l'invention, les galets sont des galets crantés, les rampes étant elles-même dentées.

Suivant encore une autre caractéristique de l'invention, les grains sont placés de façon à obtenir un mouvement de blocage vers le bas et un mouvement de déblocage vers le haut en étant guidés par un boîtier interne en forme générale de trapèze et qui sert de support par sa partie inférieure à la tige.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une élévation latérale d'une première forme de réalisation d'un dispositif de blocage de vérins mécaniques à déplacement rectiligne muni de ressorts de rappel de galets.

La Fig. 1a est une vue correspondant à la Fig. 1 mais montre à plus grande échelle l'emplacement des différentes pièces ainsi que le ressort spiral de rappel de la came de commande.

La Fig. 1b est une vue à plus grande échelle partielle de la Fig. 1 pour la mise en place des différentes pièces sans les ressorts de rappel de galets.

La Fig. 1c montre une élévation à grande échelle des organes de blocage représentés aux Fig. 1, 1a, 1b.

La fig. 2 est une élévation latérale, du dispositif de blocage des vérins mécaniques à déplacement circulaire adaptés au réglage continu du dossier d'un siège.

La fig. 3 est une élévation de face correspondant à la fig. 2.

La fig. 4 est une élévation latérale d'une variante de réalisation de la fig. 2.

La fig. 5 est une élévation latérale d'une deuxième forme de réalisation d'un vérin mécanique à déplacement rectiligne muni d'un dispositif de blocage.

La fig. 6 est une élévation latérale d'un dispositif de blocage de vérins mécaniques à déplacement circulaire adaptés au réglage du dossier d'un siège.

La fig. 7 est une variante de réalisation du dispositif de la fig. 6.

La fig. 8 est une élévation de face d'un vérin mécanique entraîné par un organe moteur pour le réglage d'un siège ou d'une glissière par moteur.

La fig. 9 est une vue en plan correspondant à la fig. 8.

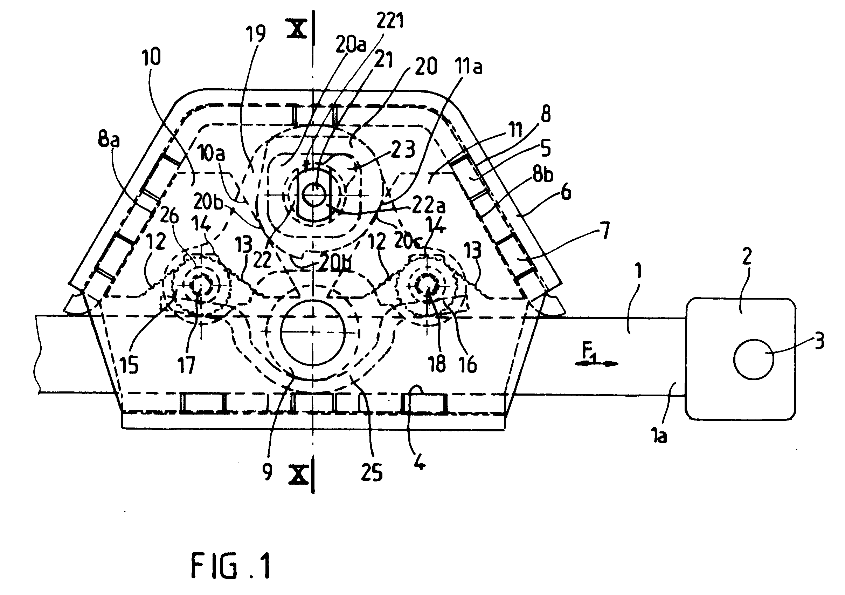

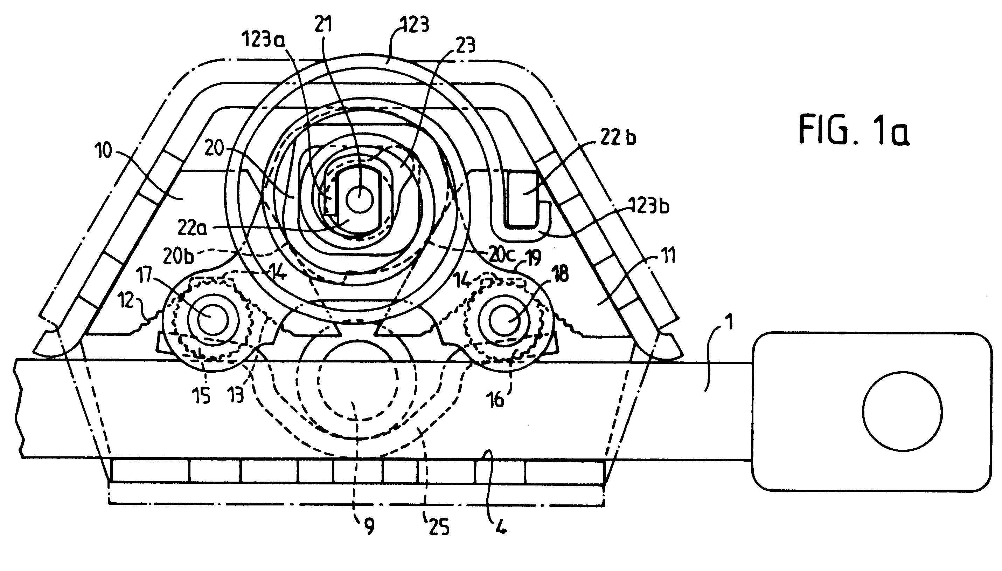

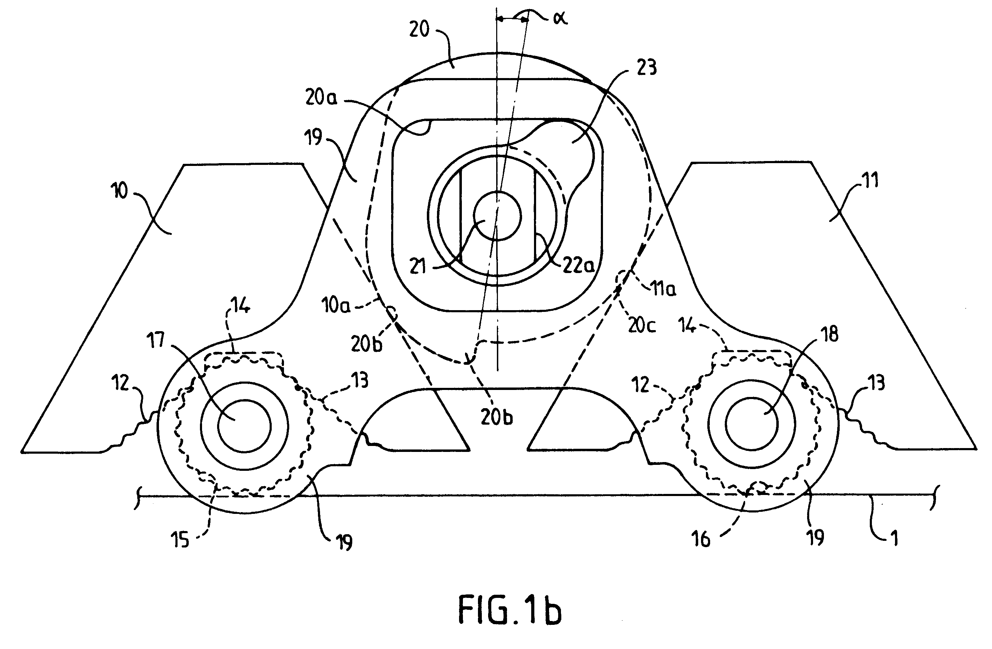

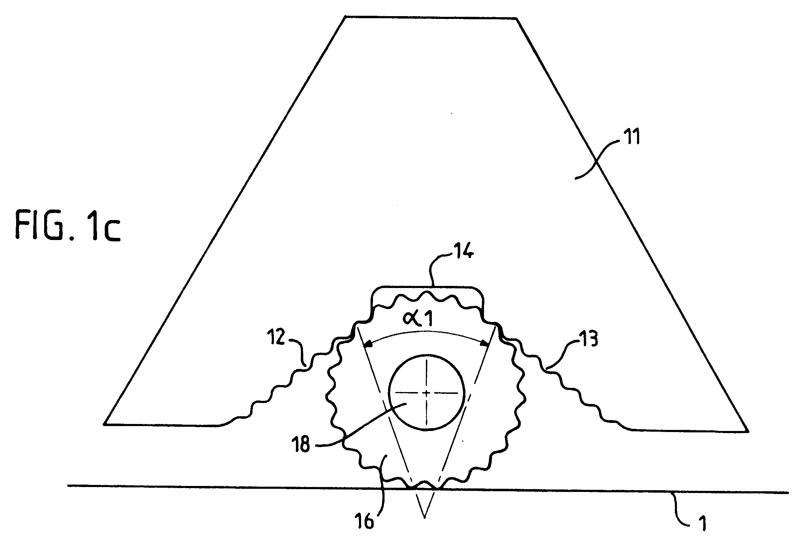

A la fig. 1, on a représenté schématiquement la tige de vérin 1 qui est rectiligne et dont la section est le plus souvent carrée.

Cette tige de vérin porte, sur son extrémité la, un attelage de vérin 2 constitué par une tête percée d'un trou 3 destiné à la fixation de la tige de vérin 1 sur un organe solidaire par exemple du profilé mobile d'une glissière ou sur un axe de rotation d'un bras de levier solidaire d'un pivot d'un dossier de siège.

Cette tige de vérin 1 repose sur le fond 4 d'un boîtier interne 5 ayant en élévation une forme trapézoidale, boîtier qui est recouvert par un boîtier couvercle 6 qui vient se fixer par des pattes recourbées 7 entrant dans des alvéoles 8 prévus à cet effet dans le boîtier couvercle 6.

Il est prévu, des deux côtés du boîtier 5, 6 une pièce circulaire 9 (voir Fig. 1 et la) dont le rôle est la fixation du boîtier 5, 6,soit à l'armature d'un siège soit en un point d'un autre mécanisme de réglage en constituant ainsi le deuxième point de fixation du vérin à course rectiligne pour l'exemple de réalisation des Fig. 1, 1a à 1c.

Ces pièces circulaires 9 sont placées dans l'axe médian vertical X-X de boîtiers 5, 6. Les côtés inclinés 8a, 8b du boîtier 5 servent de chemins de guidage à deux grains 10, 11 en forme de chapeau de gendarme et dont la plus large base est usinée pour former à chaque fois deux rampes dentées 12, 13 séparées par un dégagement 14. Les rampes 12, 13 présentent chacune une denture destinée à coopérer avec des galets 15, 16 également striés montés sur des axes 17, 18 dépassant les faces latérales des galets 15, 16. Les axes 17, 18 sont montés dans deux pièces 19 en forme de bicorne.

Une came 20 est placée entre les deux grains 10, 11 et le mouvement de cette came est commandé par un arbre 21. L'ensemble galets 15, 16, grains 10, 11, pièce en forme de bicorne 19, et came 20 est maintenue dans les boîtiers 5, 6. De plus, l'arbre 21 porte un plot 22a et cet arbre peut être commandé en rotation soit par un levier soit par tout autre moyen de rotation désiré. Deux ergots 23 solidaires de l'arbre 21 sont placés dans l'évidement central 20a de la pièce en forme de bicorne 19, la came 20 étant centrée au moyen d'alésages réalisés dans le boitier 5, couvercle 6 et l'axe 21.

Comme on peut s'en rendre compte à la Fig. 1a, un ressort spiral 123 est fixé par l'une de ses extrémités 123a sur le plot 22a et par son autre extrémité 123b sur un plot 22b solidaire du couvercle 6. De plus, on doit noter que 20b et 20c désignent les points de contact de la came 20 sur les faces latérales 10a, 11a des grains 10, 11. Finalement, la présence du ressort spiral 123 a pour effet de maintenir en position serrée les galets 15, 16 par l'intermédiaire des grains 10, 11 et de la came 20 sur la tige carrée rectiligne 1.

Ainsi, en faisant tourner l'arbre 21 dans le sens contraire aux aiguilles d'une montre, (voir angle α fig 1b) il est possible de provoquer une légère rotation de la came 20 dont les redents 20b, 20c s'abaissent et libèrent ainsi la pression qu'exerce la came sur les grains 10, 11. Ainsi, les dentures 12, 13 des grains 10, 11 se dégagent des dentures des galets 15, 16 qui reposaient fermement sur la face supérieure de la tige du vérin 1 en bloquant celle-ci.

Cette tige est donc libre et peut donc se déplacer dans les sens opposés désignés par la double flèche F1 (fig. 1).

Dans certains cas et pour assurer, lorsque la came 20 est effacée, le soulèvement aisé des galets striés 15, 16 il est possible de prévoir en supplément deux ressorts courbes 25 ayant sensiblement la forme d'un Ω et centré autour des pièces circulaires 9 solidaires des deux côtés du boîtier 5 et couvercle 6.

Lorsqu'on a placé en position correcte la tige de vérin 1, il suffit de faire tourner l'arbre 21 dans le sens des aiguilles d'une montre pour que la came 20, par ses redents 20b et 20c, bloque de nouveau les grains 10, 11 qui s'abaissent en bloquant ainsi les galets 15, 16 sur la face supérieure de la tige de vérins 1.

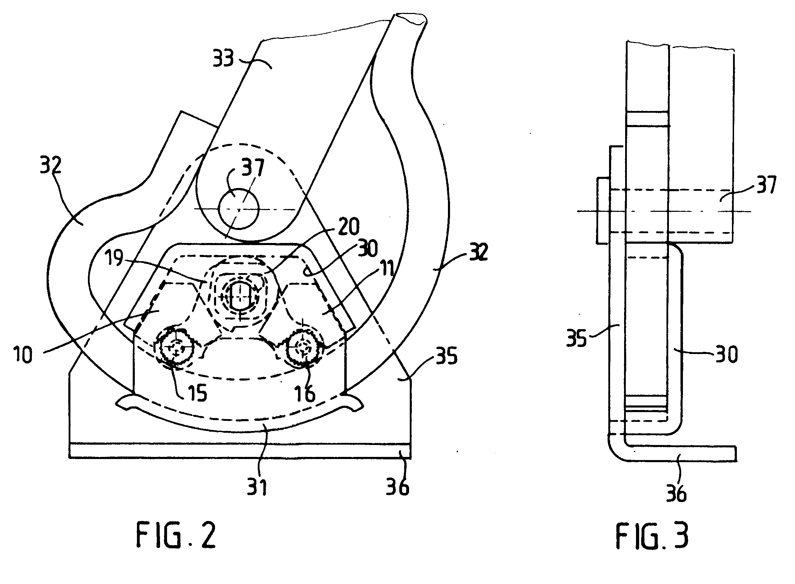

A la Fig. 1c on a représenté la position d'un galet (par exemple le galet 16) dans les rampes inclinées 12, 13 dentées. On voit que de la position des pièces, ressort un angle α 1 qui évite le basculement des galets (par exemple le galet 16) d'une part par les appuis éloignés des dents des galets sur les dentures 12, 13 réalisées dans les grains et d'autre part, par l'appui double des deux dents supérieures des galets sur la tige 1. Lors du déplacement de cette tige (droite ou arquée) il se produit la rotation d'une dent des galets dans la rampe en escalier correspondante, la compression de l'ensemble tige 1, galet 16, pièces 11 en V et came 20 puis, en réaction du boîtier 5, et couvercle 6 par la tige et l'appui de la came 20 dans le boîtier ce qui élimine le jeu horizontal de la tige ou le jeu angulaire si la tige est remplacée par une pièce arquée (fig. 2 et suivantes).

Le fait des dentures périphériques des galets 15, 16 coopérant avec les dentures 12, 13 des grains 10, 11 assure un maintien correct de ces pièces les unes par rapport aux autres et un engrènement positif des galets 15, 16 sur la face supérieure de la tige 1 du vérin en maintenant fermement cette tige même dans le cas de chocs latéraux ou frontaux du véhicule comportant les sièges équipés de ces vérins. On a donc ainsi une plus grande sécurité.

Lorsqu'on examine la fig. 2, on constate que le boîtier 30 présente un fond courbe 31 sur lequel repose une tige arquée conformée 32 qui est soudée ou fixée sur la partie inférieure de l'armature 33 du dossier d'un siège. Le boîtier 30 est fixé sur l'aile verticale 35 d'une embase 36 fixée sur le plancher du véhicule ou sur un élément de coulissement, par exemple une glissière. Les organes de blocage de la tige arquée conformée 32 sont identiques à ceux décrits à la fig. 1 et portent donc les mêmes références. Mais, dans ce cas, le ressort de rappel 25 n'a pas été représenté car il n'est pas nécessaire de l'utiliser puisque le rappel des galets 15, 16 se fait par la pièce en forme de bicorne 19 sous l'action de l'ergot 23 agissant sur la came 20 dans l'évidement 20a.Le mouvement de rotation s'effectuant dans le sens contraire aux aiguilles d'une montre, les galets striés 15, 16 se dégagent immédiatement de la face supérieure de la tige arquée conformée 32 du fait même de la forme de cette dernière et permettent ainsi la rotation aisée de l'armature 33 autour de l'axe 37 solidaire de l'aile verticale 35 de l'embase 36.

Là encore, on a augmenté considérablement la sécurité du dispositif puisque, lorsque la came 20 est en position de blocage (position représentée à la fig. 2) des grains 10, 11, les dentures des galets 15, 16 pénètrent suffisamment dans la face de la tige arquée conformée 32 pour assurer un blocage parfait.

Dans les deux cas des fig. 1 et 2, le déplacement est continu et permet donc un réglage parfait soit de la tige de vérin 1, soit du dossier considéré sans espacement.

Il s'agit donc d'un réglage appelé 0°pour le cas du vérin utilisé dans une articulation de dossier. En effet, on peut obtenir un déplacement aussi faible que possible afin d'assurer un confort parfait de l'usager. On peut également obtenir un déplacement inférieur à 1mm dans le cas d'une glissière communément appelée à déplacement 0 mm.

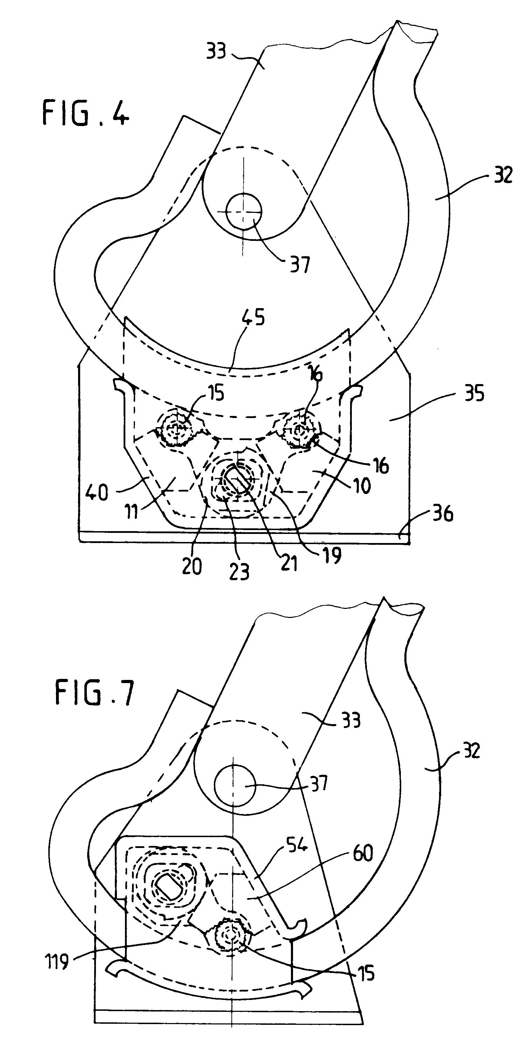

A la fig. 4, on se trouve en présence d'une réalisation sensiblement identique à celle de la fig. 2 avec l'embase 36 supportant l'aile verticale 35 maintenant en place le boîtier 40 qui est inversé à 180°.

En effet, dans ce cas, les grains 10, 11 sont placés à l'inverse de la position occupée précédemment et de ce fait, les galets 15, 16 reposent, lorsque le dispositif est déverrouillé, dans le fond des évidements constitués par les pentes opposées 12, 13 de chaque grain 10, 11. Là encore, il n'est pas nécessaire d'avoir un ressort de rappel des galets 15, 16 puisque, dès le déblocage de la came 20, les grains 10, 11 sont rappelés par la pièce 19 en forme de bicorne sous l'action de l'ergot 23 agissant sur la came 20 de l'évidement 20a. En effet, le mouvement est obtenu, par les axes 17, 18 des galets 15, 16 montés dans la pièce 19 en forme de bicorne. Ainsi les galets 15, 16 sont libres et leurs dentures ne s'aggrippent plus à la face inférieure de la pièce arquée conformée 32 solidaire de l'armature 33 du dossier du siège. Lorsque la came 20 pivote dans le sens positif les grains 10, 11 se soulèvent, repoussent les galets 15, 16 qui entrent en contact avec la pièce conformée 32 en la bloquant contre le rebord rabattu 45 du boîtier 40. Le déverrouillage du dispositif s'effectue en sens inverse par rotation de la came 20 entraînée par un levier de commande non représenté ou par un autre organe à moteur.

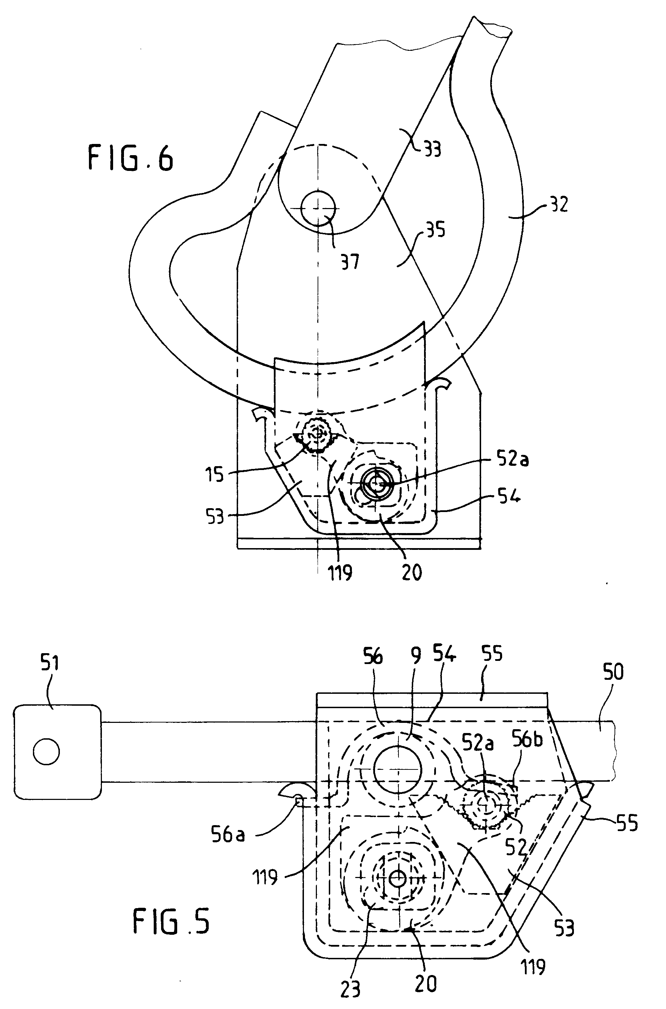

A la fig. 5, le dispositif de verrouillage de la tige rectiligne 50 muni de la tête d'attelage 51 s'effectue à l'aide d'un seul galet 52 coopérant avec un seul grain 53, ce grain et ce galet étant striés. Le grain 53 est soumis à l'action de la came 20 portant le téton 23 et, dans ce cas, du fait de la position inverse du grain 53, il est nécessaire d'utiliser un boîtier 54 permettant le maintien correct de la tige rectiligne 50 dans le couvercle 55 et également d'employer un ressort 56 sensiblement en Ω qui est accroché en 56a dans le boîtier 55 et dont l'autre extrémité 56b appuie sur l'axe 52a du galet 52. Le centrage des ressorts 56 se fait autour des pièces circulaires 9 comme dans le cas de la fig. 1. Le fonctionnement de ce dispositif de verrouillage est identique à celui décrit précédemment. 119 désigne la pièce correspondant à la pièce 19 en bicorne, des mécanismes précédents.

A la fig. 6, le dispositif de la fig. 5 est utilisé pour le positionnement d'un dossier de siège. La pièce arquée 32 est identique à celle représentée à la Fig. 2. Son fonctionnement est identique et les pièces portent donc les mêmes références qu'à la fig. 5.

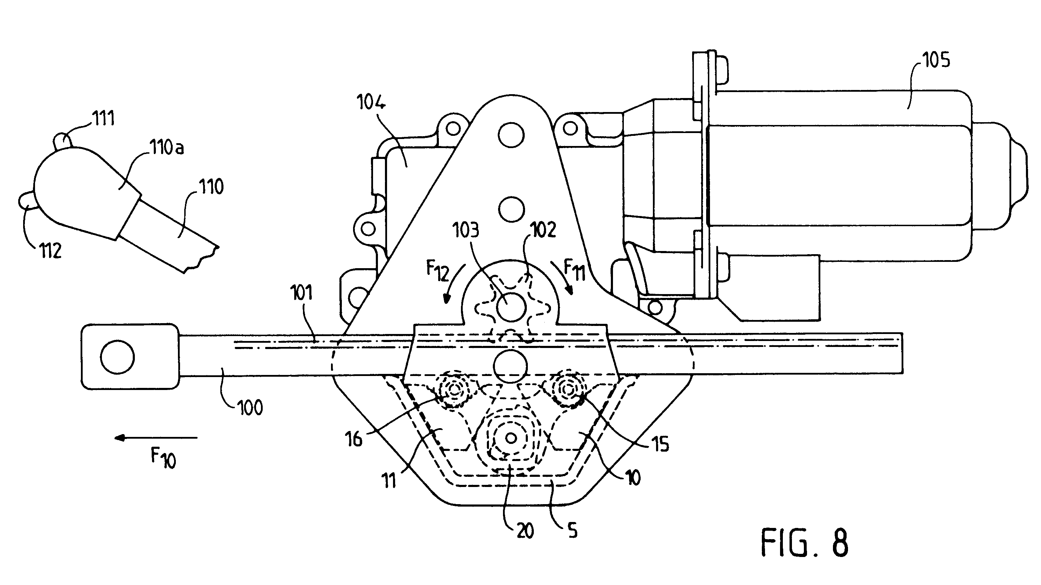

Finalement, à la fig. 7, le dispositif comporte un grain unique 60 tourné vers le bas mais le fonctionnement de ce dispositif est identique à celui de la fig. 2 et, de ce fait, on retrouve les mêmes références qu'à la figure précédente.

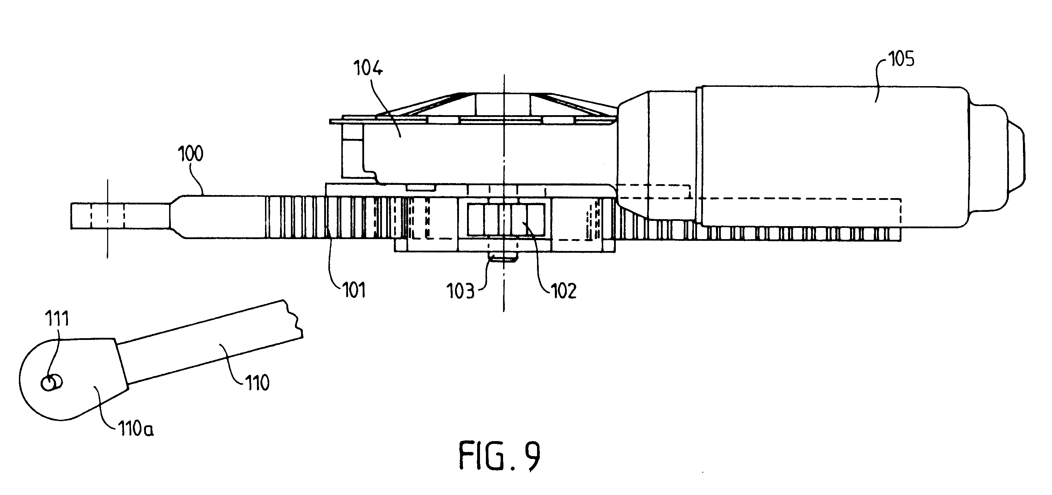

Comme on peut le voir aux fig. 8 et 9, la tige 100 du vérin mécanique présente sur sa partie supérieure une crémaillère 101 qui coopère avec un pignon 102 porté par un arbre 103 sortant d'un réducteur de vitesse 104 entraîné par un moteur 105 électrique, pneumatique ou autre.

En ce qui concerne le mécanisme de verrouillage de la tige 100, il n'y a aucune modification par rapport à la disposition représentée et décrite à la fig. 1 et, c'est pourquoi, les organes comportent les mêmes références.

Dans le cas présent, lorsque, à l'aide du levier 110, on a déverrouillé la tige 100 et que l'on désire faire coulisser cette dernière vers l'avant (flèche f10 - fig.8), on appuie sur la commande 111 portée par le bouton de manoeuvre 110a du levier 110, ce qui permet d'alimenter, à travers un interrupteur inverseur, le moteur électrique 105 en faisant tourner le pignon dans le sens de la flèche f11.

Dès la position obtenue, on lâche le bouton de commande 111 et l'on ramène le levier 110 en position de verrouillage du blocage de la tige 100.

Lorsqu'on désire déplacer vers l'arrière la tige 100, on pratique identiquement à ce qui vient d'être décrit mais en utilisant le bouton de commande 112. A ce moment, le moteur électrique 105 entraîne le pignon 102 dans le sens de la flèche f12.

Il est possible également, d'une manière très sûre de substituer au levier 110 pour le déverrouillage et le verrouillage de la came 20 un électro-aimant qui, en débloquant cette came, déverrouille la tige 100 puis, suivant le sens d'alimentation du moteur 105 de la tige 100, peut se déplacer soit vers l'avant, soit vers l'arrière. Il est possible d'utiliser un organe de commande quelconque de positionnement pour que la fonction de déverrouillage s'effectue avant que la commande moteur alimente le moteur. On peut également employer un circuit électronique à mémorisation.

Dès la fin de l'alimentation électrique du moteur 105, l'alimentation de l'électro-aimant commandant la came 20 est coupée immédiatement et un élément ressort prévu à cet effet sur l'armature mobile de l'électro-aimant ramène la came 20 dans la position de blocage.

Dans le cas ci-dessus, la motorisation est électrique mais pourrait être également pneumatique ou hydraulique, la sécurité en est ainsi accrue puisque c'est le ressort de rappel de came qui bloque l'ensemble lorsque le courant ou l'alimentation en pneumatique ou hydraulique est suspendue par raison naturelle d'utilisation ou lorsqu'il y a défaillance de l'alimentation énergétique.

## Revendications

1. Dispositif de blocage de vérins mécaniques à déplacement soit rectiligne soit circulaire, comportant au moins une tige (1, 32), normalement bloquée par des galets (15, 16) montés sur des axes (17, 18) et coopérant avec des grains en V (10, 11), comportant des rampes (12, 13) et dont le déplacement vertical est créé par la rotation d'une came (20) entraînée dans son mouvement de rotation par des organes de commande (22a) solidaires d'une pièce circulaire (22), lesdits organes de commande étant entraînés soit par une commande manuelle, soit par une commande moteur caractérisé en ce que les organes de commande sont des plots (22a) et en ce que les axes (17, 18) des galets (15, 16) sont montés sur au moins une pièce (19) manoeuvrée par un ergot (23) solidaire de la came (20), assurant ainsi un rappel positif des galets (15, 16).

2. Dispositif suivant la revendication 1, caractérisé en ce que les galets (15, 16) sont des galets crantés, les rampes (12, 13) étant elles-mêmes dentées.

3. Dispositif suivant l'une des revendications 1 ou 2, caractérisé en ce que les grains (10, 11) sont placés de façon à obtenir un mouvement de blocage vers le bas et un mouvement de déblocage vers le haut en étant guidés par un boitier interne (5) en forme générale de trapèze et qui sert de support par sa partie inférieure à la tige (1, 32).

4. Dispositif suivant l'une des revendications 1 à 3, caractérisé en ce que le dispositif de blocage ne comprend qu'un grain (53, 60) pouvant se déplacer verticalement soit vers le haut soit vers le bas sous l'action de la came (20).

5. Dispositif suivant l'une des revendications 1 à 4, caractérisé en ce que les grains présentent en coopération avec les galets (15, 16) des rampes en V (12, 13) renversées dont la face est également crantée comme les galets (15, 16).

6. Dispositif suivant l'une des revendication 1 à 5, caractérisé en ce que l'une des faces supérieure ou inférieure de la tige (100) présente une crémaillère (101) coopérant avec un pignon (102) monté sur un arbre (103) entraîné par un réducteur de vitesse (104) et un moteur (105) rendu solidaire du boîtier (5).

7. Dispositif suivant la revendication 6, caractérisé en ce que l'inversion du sens de rotation du moteur (105) est obtenue par deux circuits électriques contrôlés par des boutons de manoeuvre (111, 112) contrôlant chacun un interrupteur inverseur.

8. Dispositif suivant la revendication 6, caractérisé en ce que la commande du moteur (105) inclut un circuit électronique à mémorisation commandant également le déverrouillage, par exemple par un électro-aimant.

## Claims

1. Locking device for a mechanical actuators with rectilinear or circular movement, comprising at least one rod (1, 32) normally locked by rollers (15, 16) mounted on pins (17, 18) and cooperating with V-shaped bearing plates (10, 11) comprising ramps (12, 13) and the vertical displacement of which is created by rotation of a cam (20) that is driven in its rotary movement by control members (22a) rigidly connected to a circular part (22), said control members being driven either by a manual control or by a motorized control, characterized in that the control members are formed by studs (22a), and in that pins (17, 18) for the rollers (15, 16) are mounted on at least one part (19) controlled by a snug (23) rigidly connected to the cam (20), thereby ensuring a positive return of the rollers (15, 16).

2. Device according to claim 1, characterized in that the rollers (15, 16) are notched rollers, the ramps (12, 13) themselves being toothed ramps.

3. Device according to one of claims 1 or 2, characterized in that the bearing plates (10, 11) are placed so as to provide a locking movement in the downward direction and an unlocking movement in the upward direction while being guided by an inner casing (5) that has a general shape of a trapezium and which is used as a support for the rod (1, 32) by its lower portion.

4. Device according to one of claims 1 to 3, characterized in that the locking device comprises only one bearing plate (53, 60) that is vertically movable either upwardly or downwardly under the action of the cam (20).

5. Device according to one of claims 1 to 4, characterized in that the bearing plates are provided, in cooperation with the rollers (15, 16), with revered V-shaped ramps (12, 13), the face of which is also notched like the roller (15, 16).

6. Device according to one of claims 1 to 5, characterized in that one of the upper or lower faces of the rod (100) has a rack (101) cooperating with a pinion (102) mounted on a shaft (103) driven by a speed reducer (104) and a motor (105) rigidly connected to the casing (5).

7. Device according to claim 6, characterized in that the inversion of the rotary direction of the motor (105) is obtained by means of two electrical circuits controlled by control knobs (111, 112), each controlling a reversing switch.

8. Device according to claim 6, characterized in that the control means of the motor (105) includes a memory electronic circuit also controlling the unlocking action, for example via an electromagnet.

## Patentansprüche

1. Sperrvorrichtung für eine mechanische Winde mit geradliniger oder kreisförmiger Bewegung, die mindestens eine Stange (1, 32) umfaßt, die normalerweise durch Rollen (15, 16) blockiert wird, die auf Achsen (17, 18) angeordnet sind, und die mit V-förmigen Sperrstücken (10, 11) in Eingriff stehen, die mit Schrägen (12, 13) versehen sind, und deren vertikaler Versatz durch die Drehung einer Kurvenscheibe (20) bewirkt wird, die durch an einem runden Wellenstück (22) angebrachte Betätigungselemente (22a) mitgenommen und gedreht wird, wobei die besagten Betätigungselemente entweder auf manuelle Weise oder motorisch bewegt werden, dadurch gekennzeichnet, daß es sich bei den Betätigungselementen um Mitnehmer (22a) handelt, und weiter dadurch gekennzeichnet, daß die Achsen (17, 18) der Rollen (15, 16) in mindestens einem Trägerteil (19) gehaltert sind, das durch eine Nocke (23), die mit der Kurvenscheibe (20) verbunden ist, bewegt wird, so daß ein sicherer Rückzug der Rollen (15, 16) gewährleistet ist.

2. Vorrichtung nach Anspruch 1, dadurch gekennzeichnet, daß es sich bei den Rollen (15, 16) um geriffelte Rollen handelt, wobei die Schrägen (12, 13) selbst ebenfalls gezahnt sind.

3. Vorrichtung nach einem der Ansprüche 1 oder 2, dadurch gekennzeichnet, daß die Sperrstücke (10, 11) so angeordnet sind, daß sie durch die Führung über ein trapezförmiges Innengehäuse (5), das im unteren Teil als Aufnahme für die Stange (1, 32) dient, zur Sperrung eine Bewegung nach unten und zur Freigabe eine Bewegung nach oben erfahren.

4. Vorrichtung nach einem der Ansprüche 1 bis 3, dadurch gekennzeichnet, daß die Sperrvorrichtung nur ein Sperrstück (53, 60) umfaßt, das sich je nach Betätigung der Kurvenscheibe (20) in vertikaler Richtung nach oben oder nach unten verschieben kann.

5. Vorrichtung nach einem der Ansprüche 1 bis 4, dadurch gekennzeichnet, daß die Sperrstücke mit den Rollen (15, 16) über V-förmig nach unten gerichtete Schrägen (12, 13) in Eingriff stehen, deren Oberfläche in gleicher Weise wie die Rollen (15, 16) geriffelt ist.

6. Vorrichtung nach einem der Ansprüche 1 bis 5, dadurch gekennzeichnet, daß die Ober- oder Unterseite der Stange (100) als Zahnstange (101) ausgeführt ist, in die ein Ritzel (102) eingreift, das auf einer Achse (103) befestigt ist, die über ein Untersetzungsgetriebe (104) und einen Motor (105) angetrieben wird, wobei letztere mit dem Gehäuse (5) verbunden sind.

7. Vorrichtung nach Anspruch 6, dadurch gekennzeichnet, daß eine Umkehrung der Drehrichtung des Motors (105) über zwei elektrische Anschaltungen erreicht wird, die über Bedienknöpfe (111, 112) angesteuert werden, von denen jeder einen Umschalter betätigt.

8. Vorrichtung nach Anspruch 6, dadurch gekennzeichnet, daß die Steuerung für den Motor (105) eine elektronische Speicherschaltung für die gleichzeitige Entriegelung, z.B. durch einen Elektromagneten, enthält.
